Europäisches Patentamt

**European Patent Office**

Office européen des brevets

(19)

(11) Veröffentlichungsnummer: **0 016 868**
A2

# EUROPÄISCHE PATENTANMELDUNG

(21) Anmeldenummer: **79105353.1**

(22) Anmeldetag: **22.12.79**

(51) Int. Cl.³: **G 05 B 19/02,** G 05 B 19/18, G 06 F 3/04

(30) Priorität: **09.03.79 DE 2909212**

(43) Veröffentlichungstag der Anmeldung: **15.10.80**
**Patentblatt 80/21**

(84) Benannte Vertragsstaaten: **CH FR GB IT**

(71) Anmelder: **Trützschler GmbH & Co. KG,
Duvenstrasse 82-92, D-4050 Mönchengladbach 3 (DE)**

(72) Erfinder: **Hösel, Fritz, In der Aue 6,
D-4050 Mönchengladbach 2 (DE)**

(54) **Verfahren und Vorrichtung zur Vervielfältigung der Ausgänge einer programmierbaren Steuerung.**

(57)   Bei einem Verfahren zur Vervielfältigung der Ausgänge einer programmierbaren Steuerung, bei der z. B. Logiksignale in Logik- oder Leistungssignale umgesetzt werden, sind zu deren Ausgabe Ausgänge vorgesehen.

   Zwecks Schaffung eines Verfahrens, bei dem die Anzahl der Ausgänge auf einfache Art und mit geringem Aufwand vervielfältigt ist, bilden die Ausgänge der programmierbaren Steuerung ein Datenwort, wobei aus den Bits für die Adressen ein Ansteuersignal für einen bestimmten Ausgang gebildet und durch ein Bit für die Daten dieser Ausgang ein- oder ausgeschaltet wird.

Trützschler GmbH & Co. KG          20 321
4050 Mönchengladbach 3


Verfahren und Vorrichtung zur Vervielfältigung
der Ausgänge einer programmierbaren Steuerung

Die Erfindung betrifft ein Verfahren zur Vervielfältigung der Ausgänge einer programmierbaren Steuerung, bei der z. B. Logiksignale in Logik- oder Leistungssignale umgesetzt werden, wobei zur Ausgabe der Logik- oder Leistungssignale Ausgänge vorgesehen sind und umfaßt eine Vorrichtung zur Durchführung des Verfahrens.

Bestimmte programmierbare Steuerungen weisen aus wirtschaftlichen Gründen nur eine begrenzte Anzahl von Ausgängen auf. Werden jedoch für eine Steuerung verhältnismäßig viele Ausgänge z. B. für Leistungssignale, bei relativ geringer Verknüpfungstiefe benötigt, so werden bei bekannten Anlagen mehrere kleine Steuerungen oder ein ausbaubares Steuerungssystem eingesetzt. Diese Möglichkeit ist jedoch in vielen Anwendungsfällen aus wirtschaftlichen Gründen nicht zu verwirklichen.

Der Erfindung liegt daher die Aufgabe zugrunde, ein Verfahren der eingangs genannten Art zu schaffen, bei der die Anzahl der Ausgänge auf einfache Art und mit geringem Aufwand vervielfältigt ist.

Die Lösung dieser Aufgabe erfolgt durch die kennzeichnenden Merkmale des Patentanspruchs 1.

Erfindungsgemäß kommt von der programmierbaren Steuerung ein Datenwort, das sich jeweils aus einem Bit für die Freigabe, einem Bit für die Daten und mehreren Bits (Binärzahl) für die Adressen zusammensetzt. Zunächst wird im Adressendecoder aus der Binärzahl für die Adresse ein bestimmter Ausgang, z. B. ein Leistungsausgang zum Einschalten eines Schützes ermittelt. Gleichzeitig wird aus dem Bit für die Freigabe ein Signal gebildet, das in Abhängigkeit von dem Datenbit das Ein- oder Ausschalten eines Ausganges ermöglicht. Durch das Freigabebit wird erreicht, daß die Ausgänge der programmierbaren Steuerung im Gerät erst dann wirksam werden, wenn dieses Bit ansteht. Das Freigabebit muß vom Programm her immer zuletzt angesteuert werden und dynamisches Verhalten aufweisen.

Die maximal erreichbare Anzahl von Ausgängen ergibt sich aus der Beziehung

$$x = 2^{n-2},$$

wobei x die Anzahl der vervielfältigten Ausgänge und n die Anzahl der von der programmierbaren Steuerung benötigten Ausgänge ist.

Dadurch, daß die Ausgänge des Programmsteuergerätes ein Datenwort bilden, das mehrere Kombinationsmöglichkeiten zuläßt, kann eine Mehrzahl von Ausgängen gebildet werden, wobei die Anzahl der Kombinationsmöglichkeiten der Anzahl der gebildeten Ausgänge entspricht. Auf diese einfache Weise gelingt es, die Anzahl der Ausgänge mit geringem Aufwand zu vervielfältigen und dadurch auf wirtschaftliche Art Programmsteuerungen mit einer Vielzahl von Ausgängen
zu schaffen.

Die Vorrichtung zur Durchführung des Verfahrens ist erfindungsgemäß dadurch gekennzeichnet, daß die Ausgänge
der Programmsteuereinheit den Eingängen eines Adressendecoders zugeordnet sind, der eine Mehrzahl von Ausgängen
ansteuert. Vorzugsweise steuert der Adressendecoder die
Ausgänge über adressierbare Speicher an. Ein Vorteil liegt
darin, daß der Adressendecoder konstruktiv einfach ist,
weil der adressierbare Speicher ebenfalls decodiert.
Außerdem kann das Bit für die Daten gespeichert werden, so
daß der Ausgang die Position Ein oder Aus so lange beibehält, bis ein gegenteiliger Befehl vorliegt. Schließlich
kann dadurch Programmieraufwand in der programmierbaren
Steuerung vermieden werden.

Vorzugsweise ist zwischen dem Programmsteuergerät und dem
Adressendecoder eine Testeinrichtung angeordnet. Diese
Testeinrichtung dient dazu, jeden Ausgang separat ein-
oder auszuschalten. Nur wenn kein Test erfolgen soll,
wird das von der programmierbaren Steuerung kommende Wort
freigegeben. Soll jedoch ein Test erfolgen, so sind die
Daten von der Steuerung unwirksam und über Vorwahlschalter
wird ein entsprechendes Datenwort simuliert.

Zweckmäßig ist jedem adressierbaren Speicher ein Verstärker nachgeschaltet. Vorzugsweise kann der Verstärker
Relais, Optokoppler o. dgl. treiben. Vorzugsweise ist jedem Ausgang eine Status-Anzeige parallel geschaltet, so
daß von außen der Speicherinhalt erkennbar ist. Nach einer
weiteren bevorzugten Ausführungsform ist jedem Ausgang des
adressierbaren Speichers eine Ein- oder Ausschaltverzögerung nachgeschaltet.

Es können flüchtige oder nichtflüchtige Speicher verwendet werden. Bei flüchtigen Speichern muß die Zeit bis zum Löschen länger als ein Bearbeitungszyklus der programmierbaren Steuerung sein. Jeder Ausgang (Ausgangsstufe) kann so ausgebildet werden, daß er beliebige Sonderfunktionen übernehmen kann, z. B. Zählaufgaben, Digital-Analog-Schaltung u. ä.

Die Erfindung wird nachfolgend anhand eines zeichnerisch dargestellten Ausführungsbeispiels näher erläutert.

Es zeigt:

Fig. 1    ein von der Steuerung kommendes Datenwort in Binärzahlen,

Fig. 2    zeitliche Abfolge der Signale bei einem Einschaltvorgang und

Fig. 3    ein Blockschaltbild einer erfindungsgemäßen Vorrichtung.

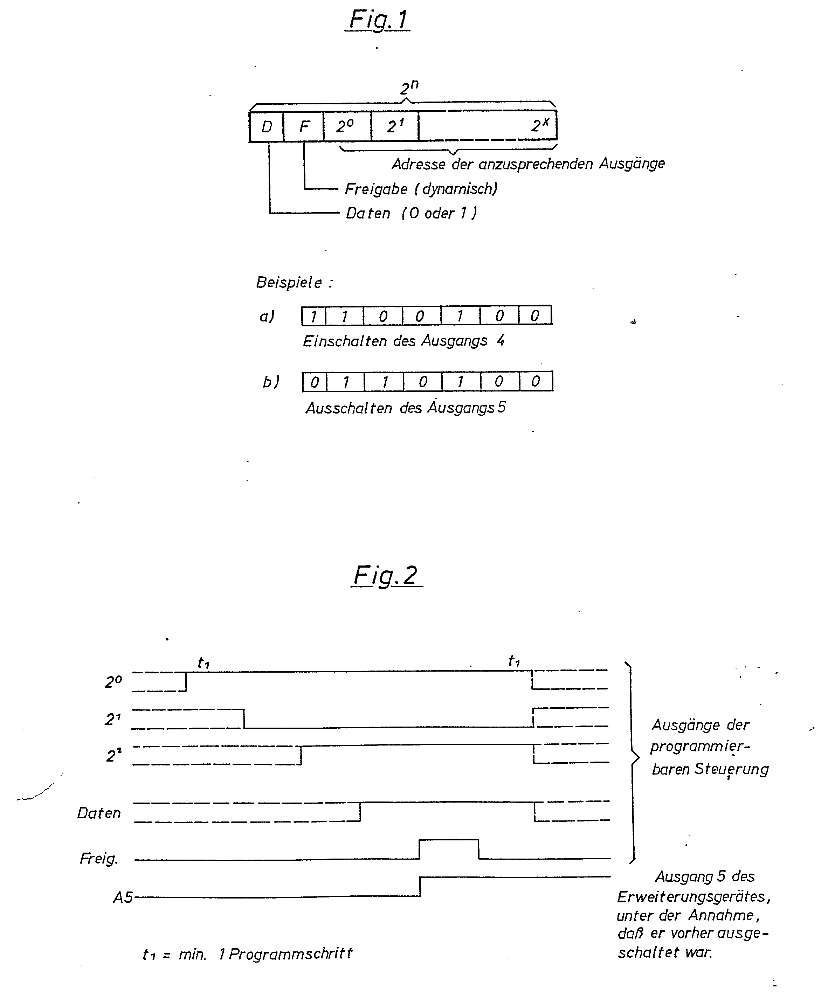

Nach Figur 1 besteht das von der Steuerung kommende Datenwort aus n Bits. Das erste Bit (D) ist für die zu übermittelnden Daten vorgesehen. Das zweite Bit (F) ist für die Freigabe vorgesehen. Die weiteren Bits ($2^0$ bis $2^X$) sind als Adresse der anzusprechenden Ausgänge vorgesehen.

Figur 2 zeigt die zeitliche Abfolge eines Einschaltvorganges z. B. für den Ausgang 5.

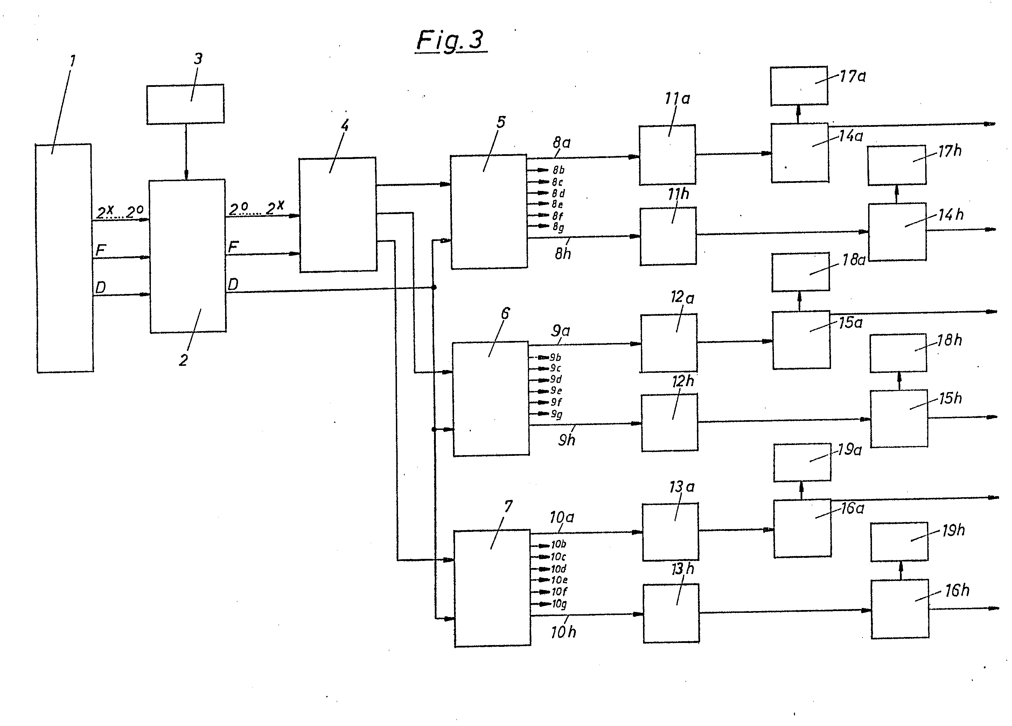

Nach Figur 3 ist dem Programmsteuerelement 1 (programmierbare Steuerung) eine Testeinrichtung 2 nachgeschaltet. Das von dem Programmsteuerelement 1 in die Testeinrichtung 2 eingegebene Datenwort setzt sich aus Bits für die Adressen, für die Freigabe und für die Daten zusammen. Die Testeinrichtung 2 wird durch einen Ein-Aus-Schalter 3 in Betrieb genommen bzw. abgeschaltet. Der Testeinrichtung 2 ist ein Adressendecoder 4 nachgeschaltet, in dem die Bits für die Adressen und das Bit für die Freigabe eingegeben werden. Das Bit für die Daten gelangt direkt von der Testeinrichtung 2 in die adressierbaren Speicher 5 bis 7. Jeder Speicher 5 bis 7 hat eine Mehrzahl von Ausgängen 8 bis 10. Jedem Ausgang 8 bis 10 ist jeweils ein Verstärker 11 bis 13 nachgeschaltet, der mit jeweils einer Ausgangsstufe 14 bis 16 verbunden ist. Jede Ausgangsstufe 14 bis 16 ist jeweils eine Status-Anzeige 17 bis 19 parallelgeschaltet, wodurch von außen jederzeit der Speicherinhalt erkennbar ist.

0016868

20 321

Trützschler GmbH & Co. KG
4050 Mönchengladbach 3

A n s p r ü c h e.

1) Verfahren zur Vervielfältigung der Ausgänge einer programmierbaren Steuerung, bei der z. B. Logiksignale in Logik- oder Leistungssignale umgesetzt werden, wobei zur Ausgabe der Logik- oder Leistungssignale Ausgänge vorgesehen sind, dadurch gekennzeichnet, daß die Ausgänge der Programmeinheit (programmierbare Steuerung) ein Datenwort bilden, das sich jeweils aus einem Bit für die Freigabe, einem Bit für die Daten und mehreren Bits für die Adressen zusammensetzt, daß das Bit für die Freigabe und die Bits für die Adressen einem Adressendecoder zugeführt werden, der aus den Bits für die Adressen in Abhängigkeit von dem Freigabebit ein Ansteuersignal für einen bestimmten Ausgang bildet und daß das Bit für die Daten diesen Ausgang ein- oder ausschaltet.

2) Vorrichtung zur Durchführung des Verfahrens nach Anspruch 1, dadurch gekennzeichnet, daß die Ausgänge (F; $2^0$ bis $2^x$) der Programmsteuereinheit (1) den Eingängen eines Adressendecoders (4) zugeordnet sind, der eine Mehrzahl von Ausgängen (14a bis 14h; 15a bis 15h; 16a bis 16h) ansteuert.

3) Vorrichtung nach Anspruch 2, dadurch gekennzeichnet, daß der Adressendecoder (4) über adressierbare Speicher (5 bis 7) die Ausgänge (14a bis 14h; 15a bis 15h; 16a bis 16h) ansteuert.

- 2 -

4) Vorrichtung nach Anspruch 2 oder 3, dadurch gekennzeichnet, daß zwischen der Programmsteuereinheit (1) und dem Adressendecoder (4) eine Testeinrichtung (2) angeordnet ist.

5) Vorrichtung nach einem der Ansprüche 2 bis 4, dadurch gekennzeichnet, daß jedem adressierbaren Speicher (5 bis 7) ein Verstärker (11a bis 11h; 12a bis 12h; 13a bis 13h) nachgeschaltet ist.

6) Vorrichtung nach einem der Ansprüche 2 bis 5, dadurch gekennzeichnet, daß der Verstärker (11a bis 11h; 12a bis 12h; 13a bis 13h) Relais, Optokoppler o. dgl. treiben kann.

7) Vorrichtung nach einem der Ansprüche 2 bis 6, dadurch gekennzeichnet, daß jedem Ausgang (14a bis 14h; 15a bis 15h; 16a bis 16b) eine Status-Anzeige (17) zugeordnet ist.

8) Vorrichtung nach einem der Ansprüche 2 bis 7, dadurch gekennzeichnet, daß jedem Ausgang (8a bis 8h; 9a bis 9h; 10a bis 10h) des adressierbaren Speichers (5 bis 7) eine Ein- oder Ausschaltverzögerung nachgeschaltet ist.

- 3 -

## Fig.1

$2^n$

| D | F | $2^0$ | $2^1$ | | $2^X$ |

Adresse der anzusprechenden Ausgänge

Freigabe (dynamisch)

Daten (0 oder 1)

Beispiele :

a)

| 1 | 1 | 0 | 0 | 1 | 0 | 0 |

Einschalten des Ausgangs 4

b)

| 0 | 1 | 1 | 0 | 1 | 0 | 0 |

Ausschalten des Ausgangs 5

## Fig.2

$2^0$ $\quad t_1 \quad\quad t_1$

$2^1$

$2^2$

Daten

Freig.

A5

Ausgänge der programmierbaren Steuerung

Ausgang 5 des Erweiterungsgerätes, unter der Annahme, daß er vorher ausgeschaltet war.

$t_1$ = min. 1 Programmschritt

Fig.3

- 2/2 -